# EUROPEAN PATENT APPLICATION

(11) **EP 3 666 054 A1**
(43) Date of publication of application: **17.06.2020**
(21) Application number: 19212403.0
(22) Date of filing: 29.11.2019
(51) Int. Cl.: A01C 23/00, B01D 29/03

(54) **AUTOMATIC SLURRY FILTER**

(30) Priority: 12.12.2018 ES 201831903 U
(71) Applicant: MAQUINARIA AGRICOLA PLUMED SL, 44300 Monreal del Campo (ES)
(72) Inventor: Lopez Plumed, Juan, 44300 Monreal del Campo (ES)
(74) Representative: Lahidalga de Careaga, Jose Luis

(57) **Abstract**

Automatic slurry filter which, incorporated in a machine (1) for applying slurry by means of a spraying system (3) with hydraulic drive, and composed by a box consisting of a prismatic body (4), through which the product passes by gravity or by pressure, with an upper closing lid (5), an interior strainer (6), made of a perforated metallic plate, and a lateral door for access to the interior strainer in order to proceed to its extraction and cleaning, it is characterised by having automatic means of opening and closing this lateral door.

## Description

### PURPOSE OF THE INVENTION

The invention, as expressed in the title of this descriptive report, refers to an automatic filter for slurry (liquid manure) that provides, in the function to which it is dedicated, advantages and characteristics that are described in detail later, and which suppose an improvement of the current state of the art.

More specifically, the purpose of the invention is focused on a slurry filter that, incorporated to machines designed for its use, is applied in agricultural operations by means of tank trucks with a spraying system. It presents the particularity of having an improved structural configuration that allows its automatic opening and closing, by means of a hydraulic system associated with the machine itself, in order to facilitate its cleaning.

### FIELD OF APPLICATION OF THE INVENTION

The field of application of this invention is framed in the sector of the industry dedicated to the manufacturing of equipment, accessories, and agricultural and livestock devices, focussing particular on the area of slurry filters.

### BACKGROUND OF THE INVENTION

As it is well known, slurry or liquid manure is a livestock waste product that is currently used in agriculture through its application with spraying systems, normally consisting of machines with hydraulic operation, such as, for example, tank trucks. However, this application must be carried out by correctly filtering the slurry to avoid blockages in the system, since it deals with a product that usually contains solid particles, for which reason a filter is normally used that is appropriate for this particular product.

This filter is generally formed by a type of prismatic box, made of robust iron or steel sheets, which is open above and below so that the product passes through it by gravity or by pressure, and it is provided with an interior strainer, formed by a perforated flat metallic plate that retains the solid elements contained in the product and that, therefore, has to be cleaned periodically in order to provide a proper service.

The problem is that, in order to carry out this cleaning, up to now, the filter box has a lateral door that, also made by a robust and heavy iron or steel plate, is bolted to the body of the box, so that in order to access the strainer and extract it for its cleaning, it is first necessary to unbolt the lateral door and, once the strainer is extracted and cleaned, it has to again be fastened with its bolts, and there can be up to ten bolts, since there are several on each of the four sides of the door, to recover the water tightness of the body of the box on this side, since the loss of the liquid must be avoided.

The objective of this invention is to provide an improved type of filter for this type of machines. It avoids the inconvenience and the time spent in bolting and unbolting the lateral door of the filter, taking advantage of the machine's hydraulic mechanism so that the opening and closing of the lateral door accessing the strainer is done automatically.

Furthermore, and as a reference to the current state of the art, it can be pointed out that the existence is not, at least by the applicant, of any other automatic filter for slurry or any other invention of a similar application that presents technical, structural and constitutive characteristics that are equal or similar to those of the one claimed here.

### EXPLANATION OF THE INVENTION

The automatic slurry filter that the invention proposes fulfils the abovementioned objectives satisfactorily, with the characterising details that make it possible and that distinguish it being included appropriately in the final claims that accompany this description.

More specifically, the filter that the invention proposes, as noted earlier, is a slurry filter of the type incorporated to machines designed for its application by a hydraulic-driven spraying system, for example, in agricultural operations, which is distinguished by the fact of having a structural configuration that includes a mechanism for the automatic opening and closing of its door that is accessed for its cleaning, using a hydraulic piston that, preferably, is connected to the hydraulic system of the machine.

To do this, the filter, which, as it is well known, is formed by a type of prismatic box, made of robust iron or steel sheets, which is open above and below so that the product passes through it by gravity or by pressure and provided with an interior strainer, formed by a perforated flat metallic plate which is placed horizontally so that it retains the solid elements contained in the product when it passes through it. This box also has a lateral door to access the strainer in order to extract and clean it.

And, through this already known configuration, the filter is distinguished by having, incorporated in the interior of the box and on the interior strainer, a hydraulic piston which is fastened on one end to the lateral door and on the other to the opposite wall of the prismatic body of the box, with this lateral door being attached to the body with an upper hinge that allows it to swing open through the activation of this piston. The consequent extension of the piston causes the lateral door to open to give access to the strainer and, once the cleaning operations are done and the door is again closed, this piston exerts force in the opposite direction, keeping the door closed and making its fitting to the body of the box be perfectly watertight and without loss of liquid.

Logically, in the union between the door and the walls of the box, rubber stripping can be placed, as is done with the lateral door of the current filters.

In any case, in addition, the interior strainer is linked to the lateral door with a chain, cable or similar which, with the opening of this door, pulls on it and makes it swing on the articulated joint that connects it on one of its sides to the body of the box, so that the activation of the piston, besides automatically opening the lateral door of the filter, at the same time automatically lowers the strainer, so that it hangs vertically to facilitate its cleaning.

### DESCRIPTION OF THE DRAWINGS

In order to supplement the description that is being made and for the purpose of aiding a better understanding of the characteristics of the invention, a set of drawings are attached to this descriptive report, as an integral part thereof, in which as an illustration but not limited to it, the following is represented:
Figure number 1. It shows a schematic vertical view of a slurry applying machine that incorporates the automatic slurry filter which is the subject of the invention, noting its placement in it.
Figure number 2. It shows an upper lateral perspective view of the filter, according to the invention, represented without its upper lid, noting its general configuration and some of its principal parts.
Figure number 3. It shows an upper perspective view of the filter of the invention, also represented without the upper lid, noting its interior configuration and the principal parts and elements that are incorporated in this interior, especially the strainer and the piston that activates the lateral door.

And figure number 4. It shows a lateral perspective view of the filter of the invention, in this case represented with the lateral door partially open, noting the way in which the piston moves for its automatic opening.

### PREFERRED REALISATION OF THE INVENTION

In view of the mentioned figures, and according to the adopted numeration, one can observe in them a non-limiting example of the realisation of the recommended automatic slurry filter, which is comprised of the parts and elements indicated and described in detail below.

As noted in these figures, the described filter (1), used mainly for its incorporation to a machine (2), for example a tank truck, for applying slurry by means of a spraying system (3) with hydraulic drive, is made from a box consisting of a prismatic body (4), through which the product passes by gravity or pressure, and that has an upper lid (5) for closing it, with an interior strainer (6), composed of a perforated metallic plate, which is placed horizontally to retain the solid contents in the product when it passes through it, and with a lateral door (7) for access to the interior strainer (6) for the extraction and cleaning of the strainer, being distinguished by having means for the automatic opening and closing of this lateral door (7) that, preferably, are constituted by at least one hydraulic piston (8) activated by the hydraulic system of the machine (2) to which it is linked by means of the corresponding hoses (9).

For this, the hydraulic piston (8) is fastened at one end (8a) to the internal face of the lateral door (7) and at the other end (8b) to the opposite wall of the prismatic body (4) of the box, with this lateral door (7) being joined to the prismatic body (4) by an upper hinge (10) that allows it to swing open, in such a way that by activating the hydraulic piston (8) and its consequent extension, it causes the door to open, giving access to the interior strainer (6) and, when at rest, this piston (8) exerts force in the opposite direction keeping the door (7) closed. None the less, optionally, the lateral door (7) incorporates additional closures, for example, some pressure locking clips (11).

Preferably, in addition, the interior strainer (6) is connected to the prismatic body (4) of the box of the filter (1) through an articulated connection (12) and is linked to the lateral door (7) with a chain (13), cable or similar such that the opening of this door (7) by means of the activation of the piston (8), at the same time, brings about the automatic lowering of the strainer (6), so that it hangs vertically to facilitate its cleaning.

Having described sufficiently the nature of this invention, as well as the way to put it into practice, it is not considered necessary to extend its explanation so that any expert in the subject may understand its scope and the advantages that are derived from it, observing that, within its essence, it can be carried out in other forms of realisation that differ in detail from that indicated as an example, and which will be covered by the protection that is claimed as long as they do not alter, change or modify its main principle.

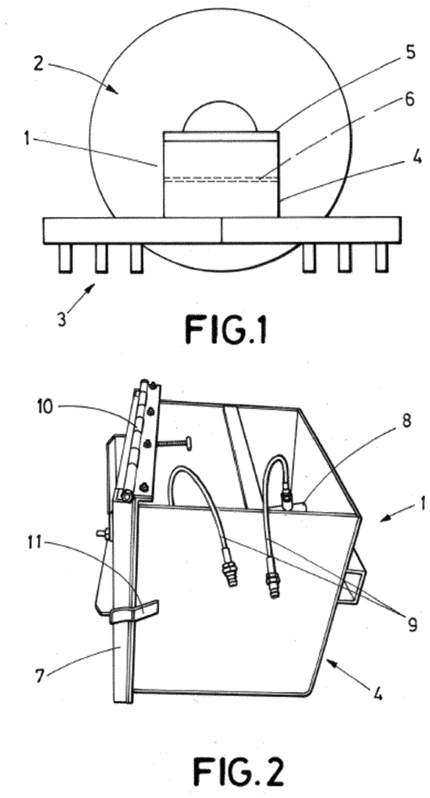

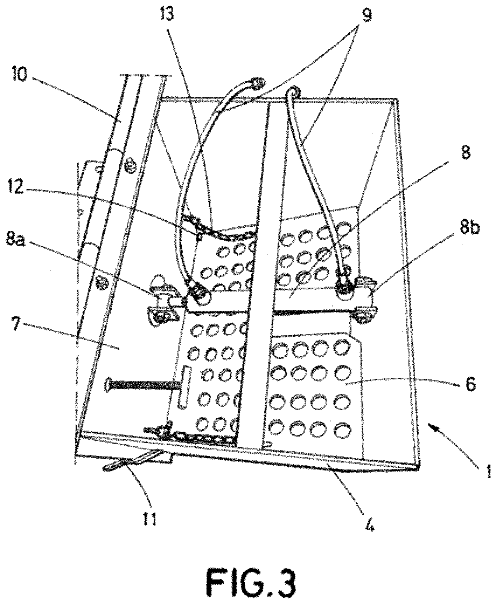

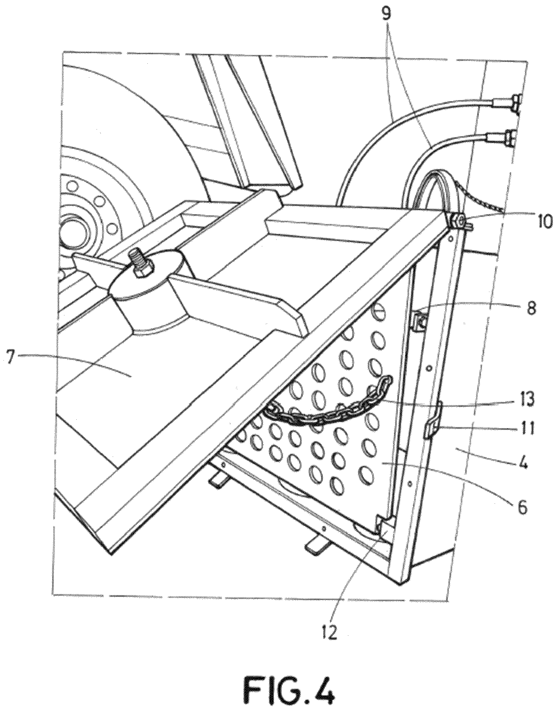

## Claims

1. AUTOMATIC SLURRY FILTER which, incorporated in a machine (2) for applying slurry by means of a spraying system (3) with hydraulic drive, and composed by a box consisting of a prismatic body (4), through which the product passes by gravity or by pressure, with an upper closing lid (5), an interior strainer (6), made of a perforated metallic plate, and a lateral door (7) for access to the interior strainer (6) in order to proceed to its extraction and cleaning, it is **characterised by** having automatic means of opening and closing this lateral door (7).

2. AUTOMATIC SLURRY FILTER according to claim 1, **characterised** because the means for automatic opening and closing of the lateral door (7) are constituted by, at least, one hydraulic piston (8).

3. AUTOMATIC SLURRY FILTER according to claim 2, **characterised** because the hydraulic piston (8) is activated through the hydraulic system of the machine (2) to which it is linked by means of the corresponding hoses (9).

4. AUTOMATIC SLURRY FILTER according to either of the claims 2 or 3, **characterised** because the hydraulic piston (8) is fastened at one end (8a) to the internal face of the lateral door (7) and at the other end (8b) to the opposite wall of the prismatic body (4) of the box, with this lateral door (7) being joined to the prismatic body (4) by an upper hinge (10) that allows it to swing open, in such a way that by activating the hydraulic piston (8) and its consequent extension, it causes the door to open, giving access to the interior strainer (6) and, when at rest, this piston (8) exerts force in the opposite direction keeping the door (7) closed.

5. AUTOMATIC SLURRY FILTER according to claim 4, **characterised** because the lateral door (7) incorporates additional closures (11).

6. AUTOMATIC SLURRY FILTER according to either of the claims 2 or 5, **characterised** because the interior strainer (6) is connected to the prismatic body (4) of the box of the filter (1) through an articulated connection (12) and is linked to the lateral door (7) with a chain (13), cable or similar, such that the opening of this door (7) by means of the activation of the piston (8), at the same time, causes the lowering of the strainer (6), so that it hangs vertically.
